# EUROPÄISCHE PATENTANMELDUNG

(11) **EP 4 336 690 A1**
(43) Veröffentlichungstag der Anmeldung: **13.03.2024**
(21) Anmeldenummer: 22194382.2
(22) Anmeldetag: 07.09.2022
(51) Int. Cl.: H02J 3/00, H02J 3/01, H02J 3/18

(54) **ANORDNUNG ZUR KOMPENSATION VON NETZSTÖRUNGEN**

(71) Anmelder: Siemens Aktiengesellschaft, 80333 München (DE)
(72) Erfinder: Krupp, Henrik, 91056 Erlangen (DE); Mondal, Gopal, 91058 Erlangen (DE); Sirtl, Jennifer, 90763 Fürth (DE)
(74) Vertreter: Siemens Patent Attorneys

(57) **Zusammenfassung**

Die Erfindung beschreibt eine Anordnung zur Kompensation von Netzstörungen in einem Dreiphasennetz (10), wobei die Netzstörungen im Betrieb einer an das Dreiphasennetz (10) angeschlossenen, elektrischen Komponente (20) erzeugt sind. Die Anordnung umfasst eine Steuereinheit (50) und ein Netzfilter (30), das in dem Dreiphasennetz (10) angeordnet ist, um die Netzstörung zu reduzieren. Das Netzfilter (30) umfasst eine Kombination von zumindest zwei aktiven Netzfilterstufen (31, 32), die zu der elektrischen Komponente (20) parallel geschaltet sind. Die Steuereinheit (50) ist dazu ausgebildet, jede der Netzfilterstufen (31, 32) im Betrieb der elektrischen Komponente (20) für die Korrektur der Netzstörungen innerhalb eines jeweils zugeordneten Frequenzbereichs zu betreiben.

## Beschreibung

Die Erfindung betrifft eine Anordnung zur Kompensation von Netzstörungen in einem Dreiphasennetz.

An ein Dreiphasennetz angeschlossene, elektrische Komponenten erzeugen bei deren Betrieb unerwünschte Netzstörungen, die nach Möglichkeit vollständig kompensiert werden müssen. Die Netzstörungen umfassen ein sehr breites Spektrum an leitungsgebundenen Störungen, insbesondere Oberschwingungen des Stromes bei Vielfachen der Netzfrequenz des Dreiphasennetzes. Netzstörungen erzeugende elektrischen Komponenten sind beispielsweise elektrische Großanlagen, die zur Versorgung von Elektrolyseanlagen verwendet werden und Thyristor- oder Dioden-basierte Gleichrichter umfassen.

Um die Netzstörungen zu reduzieren, ist es bekannt, aktive Netzfilter einzusetzen. Die aktiven Netzfilter bezwecken hierbei eine Reduktion auf oder unter einen durch die Norm VDE-AR-N 4110 vorgegebenen Grenzwert der sog. THD (Total-Harmonic-Distorsion). Aktive Netzfilter können beispielsweise in Gestalt sog. Multilevel-Netzfilter vorliegen, die sich an eine abhängig von der elektrischen Komponente geforderte elektrische Leistung und den Spannungsbereich der elektrischen Komponente anpassen lassen. Von Vorteil ist ferner, dass Multilevel-Netzfilter/aktive Netzfilter auch zur Blindleistungskompensation herangezogen werden können.

Thyristor-basierte Gleichrichter erzeugen besonders hohe Störanteile und damit Anforderungen an die Kompensation der Netzstörung. Von diesen erzeugte niederfrequente Störanteile (insbesondere Drei-, Fünf-, Sieben-, Neun-Vielfache der Grundschwingung des Dreiphasennetzes) weisen in der Regel sehr hohe Amplituden auf. Die Schaltelemente des aktiven Netzfilters werden daher derart gewählt, dass eine ausreichend hohe Stromtragfähigkeit zur Kompensation der niederfrequenten Störanteile erreicht wird. Beispielsweise können hierzu Si-IGBTs mit einer Schaltfrequenz zwischen 2 kHz und 16 kHz gewählt werden. Aktive Netzfilter auf Basis von IGBTs haben jedoch nur eingeschränkte Möglichkeiten, höherfrequente Störanteile zu kompensieren. Dadurch ist es schwierig, die Verzerrungsleistung alleine durch das aktive Netzfilter bis in den, durch die oben genannte Norm festgelegten, zulässigen Bereich zu reduzieren.

Es ist Aufgabe der Erfindung, eine Anordnung zur Kompensation von Netzstörungen in einem Dreiphasennetz anzugeben, welche baulich und/oder funktional verbessert ist, so dass die Netzstörungen beim Betrieb einer an das Dreiphasennetz angeschlossenen, elektrischen Komponente auf einfache und zuverlässige Weise in einen zulässigen Normbereich reduziert werden können.

Diese Aufgabe wird gelöst durch eine Anordnung gemäß den Merkmalen des Anspruches 1. Vorteilhafte Ausgestaltungen ergeben sich aus den abhängigen Ansprüchen.

Es wird eine Anordnung zur Kompensation von Netzstörungen in einem Dreiphasennetz vorgeschlagen. Die Netzstörungen sind bzw. werden im Betrieb einer an das Dreiphasennetz angeschlossenen, elektrischen Komponente erzeugt. Eine solche elektrische Komponente kann allgemein aus Sicht des Dreiphasennetzes ein Verbraucher sein. Ebenso kann die elektrische Komponente aus Sicht des Dreiphasennetzes eine energieerzeugende bzw. energieeinspeisende Anlage sein. Beispielsweise handelt es sich bei der elektrischen Komponente um eine elektrische Großanlage, wie z.B. einen Thyristor- oder Dioden-basierten Gleichrichter, der bei Elektrolyseanlagen verwendet werden kann. Die Anordnung zur Kompensation von Netzstörungen umfasst eine Steuereinheit und ein Netzfilter, das in dem Dreiphasennetz angeordnet ist, um die Netzstörung zu reduzieren.

Erfindungsgemäß umfasst das Netzfilter eine Kombination von zumindest zwei aktiven Netzfilterstufen, die zu der elektrischen Komponente parallel geschaltet sind. Die Steuereinheit ist dazu ausgebildet, jede der Netzfilterstufen im Betrieb der elektrischen Komponente für die Korrektur der Netzstörungen innerhalb eines jeweils zugeordneten Frequenzbereichs zu betreiben.

Die Erfindung schafft auf einfache Weise ein höchst effektives Netzfilter, das die Korrektur bzw. Kompensation von Netzstörungen über einen besonders weiten Frequenzbereich ermöglicht. Dies wird durch eine Mehrzahl von Netzfilterstufen des Netzfilters erreicht, indem die Netzfilterstufen nur die Störkomponenten in dem ihnen zugewiesenen Frequenzbereich kompensieren. Spektralkomponenten außerhalb dieses Frequenzbereichs lassen die Netzfilterstufen demgegenüber mehr oder minder unberührt. Die den Netzfilterstufen jeweils zugeordneten Frequenzbereiche überlappen sich dabei nicht.

Das Netzfilter stellt in seiner Gesamtheit ein Multilevel-Netzfilter dar, d.h. ein aus mehreren Einzelmodulen zusammengesetztes Netzfilter, welches dazu ausgebildet ist, eine Störung zu messen und eine geeignete Gegenstörung zu verwenden. Multilevel-Netzfilter weisen den Vorteil auf, dass passive Komponenten, wie z.B. Induktivitäten des Netzfilters, kleiner ausgelegt werden können, im Vergleich zu passiven Filtern.

Die Anzahl der Netzfilterstufen ist beliebig wählbar, wodurch ein kaskadierbares Netzfilter bereitgestellt werden kann. Es versteht sich jedoch, dass die Mindestanzahl an Netzfilterstufen zwei ("2") beträgt. Hierdurch ist es möglich, einer jeweiligen Netzfilterstufe einen zuvor definierten Frequenzbereich (Frequenzband) zuzuordnen, wodurch die Kompensation der Netzstörungen besonders zuverlässig ermöglicht wird. Dies ermöglicht es, das Netzfilter flexibel an die elektrische Komponente anzupassen, und zwar sowohl hinsichtlich des Spannungs- als auch des Leistungsbereiches. Darüber hinaus ist eine einfache Anpassung an das von der elektrischen Komponente erzeugte Störspektrum möglich.

Von Vorteil ist es ferner, dass das Netzfilter in Modulbauweise aufgebaut werden kann, so dass es in einfacher Weise wirtschaftlich und technisch vorteilhaft für Großanlagen mit hoher Störemission einsetzbar ist.

Durch die Steuereinheit ist es zudem möglich, die Entstehung von Pendelströmen zwischen den Netzfilterstufen zu verhindern, so dass Induktivitäten in den Phasen des Dreiphasennetzes entbehrlich sind. Dies vereinfacht den Aufbau und hilft, Kosten zu senken.

Gemäß einer zweckmäßigen Ausgestaltung sind die zumindest zwei aktiven Netzfilterstufen parallel geschaltet.

Eine weitere zweckmäßige Ausgestaltung sieht vor, dass jede Netzfilterstufe pro Phase des Dreiphasennetzes einen Zweig mit einer Induktivität und zumindest einem Schaltmodul umfasst. Die Anzahl der Schaltmodule pro Zweig beträgt zweckmäßigerweise zwei oder drei. Die Anzahl der Schaltmodule bemisst sich grundsätzlich nach dem geforderten Spannungs- und Leistungsbereich der elektrischen Komponente sowie der in den jeweiligen Netzfilterstufen verwendeten Typen von Leistungshalbleiterschaltern. Zur Unterdrückung der Störkomponente ist es von Vorteil, aber nicht zwingend, mehr als ein Schaltmodul pro Zweig zu verwenden.

Es hat sich als zweckmäßig herausgestellt, dass die Störkomponenten ausreichend effektiv unterdrückt werden, wenn die Anzahl an Schaltmodulen pro Zweig zwei oder drei beträgt. Dadurch können die Komplexität und der Bauraum des Netzfilters gering gehalten werden.

Eine weitere zweckmäßige Ausgestaltung sieht vor, dass jede Netzfilterstufe gleichartig aufgebaute Zweige umfasst. Der Aufbau der Zweige in unterschiedlichen Netzfilterstufen kann demgegenüber unterschiedlich sein.

Die Zweige einer jeweiligen Netzfilterstufe können gemäß einer Ausgestaltung in Sternschaltung verschaltet sein. In einer anderen Ausgestaltung können die Zweige einer jeweiligen Netzfilterstufe in Dreieckschaltung verschaltet sein. Die zumindest zwei Netzfilterstufen können somit jeweils ausschließlich Zweige in Sternschaltung oder ausschließlich Zweige in Dreiecksschaltung aufweisen. Es kann auch vorgesehen sein, dass die Zweige einer der Netzfilterstufen in Sternschaltung und die Zweige einer anderen der Netzfilterstufen in Dreiecksschaltung verschaltet sind. Es sind somit beliebige Kombinationen möglich, sofern sichergestellt ist, dass jede Netzfilterstufe jeweils gleichartig aufgebaute Zweige umfasst.

Eine weitere zweckmäßige Ausgestaltung sieht vor, dass jedes der Schaltmodule als Brückenschaltung mit vier steuerbaren Leistungshalbleiterschaltern und einem Zwischenkreiskondensator aufgebaut ist. Insbesondere kann jedes der Schaltmodule als H-Brückenschaltung aufgebaut sein.

Die Schaltmodule in den Zweigen der aktiven Netzfilterstufen umfassen zweckmäßigerweise Leistungshalbleiterschalter eines gleichen Typs. Dabei können die Schaltmodule unterschiedlicher Netzfilterstufen z.B. Leistungshalbleiterschalter eines unterschiedlichen Typs umfassen.

Als Leistungshalbleiterschalter können beispielsweise MOSFETs (insbesondre SiC-MOSFETs) sowie IGBTs (insbesondere Si-IGBTs) verwendet werden. IGBTs werden vorzugsweise zur Kompensation von niederfrequenten Störanteilen, MOSFETs vorzugsweise zur Kompensation von höherfrequenten Störanteilen genutzt. Letztere weisen hierbei in der Regel eine im Vergleich geringere Strombelastbarkeit auf.

Beispielsweise können die Leistungshalbleiterschalter der Schaltmodule einer Netzfilterstufe mit MOSFETs und die Leistungshalbleiterschalter der Schaltmodule der anderen Netzfilterstufe mit IGBTs versehen werden. Dadurch ist es möglich, mit einer der Netzfilterstufen Störanteile bis zu einer vorgegebenen Harmonischen der Netzfrequenz zu kompensieren, während die Netzfilterstufe mit den Leistungshalbleiterschaltern des anderen Typs Störanteile ab dieser Harmonischen ausgleicht. Die vorgegebene Harmonische kann z.B. die 9. Harmonische sein.

Gemäß einer weiteren zweckmäßigen Ausgestaltung ist vorgesehen, dass die Steuereinheit für jede der aktiven Netzfilterstufen eine zugeordnete Filterstufen-Steuereinheit umfasst, wobei jede der Filterstufen-Steuereinheiten dazu ausgebildet ist, Störkomponenten durch Ansteuerung der Leistungshalbleiterschalter in dem Frequenzbereich zu kompensieren, der der Netzfilterstufe zugeordnet ist. Zweckmäßigerweise umfasst jede der Filterstufen-Steuereinheiten eine Messeinrichtung zur Bestimmung der Frequenzen der Netzstörungen. Insbesondere ist jede der Filterstufen-Steuereinheiten dazu ausgebildet, eine Selektion des der zugeordneten Filterstufen-Steuereinheit zugeordneten Frequenzbereichs durchzuführen.

Die Netzfilterstufen können durch unabhängige Regelschaltungen (Steuereinheiten) oder durch eine gemeinsame Steuereinheit gesteuert werden. Unabhängige Steuereinheiten, die durch den Austausch von Daten- und/oder Messignalen aufeinander abgestimmt sind, können wie eine einzelne Steuereinheit angesehen werden. Im Falle von unabhängigen Steuereinheiten muss jede Filterstufen-Steuereinheit über eine eigene Messeinrichtung verfügen und selbst die Selektion des für sie gültigen Frequenzbereichs durchführen. Im Ergebnis sorgt die Steuereinheit dafür, dass die Netzfilterstufen die Störkomponenten in dem ihnen zugewiesenen Frequenzbereich kompensieren, für den die darin verwendeten Leistungshalbleiterschalter optimiert sind. Die Spektralkomponenten außerhalb dieses Bereichs bleiben unberührt davon.

Zweckmäßigerweise ist das Netzfilter in räumlicher Nähe zu der elektrischen Komponente angeordnet.

Die Erfindung wird nachfolgend näher anhand eines Ausführungsbeispiels in der Zeichnung erläutert. Es zeigen:
- Fig. 1: eine schematische Darstellung einer erfindungsgemä-ßen Anordnung zur Kompensation von Netzstörungen;
- Fig. 2: eine erste Ausgestaltungsvariante einer Netzfilterstufe eines Netzfilters der Anordnung gemäß Fig. 1;
- Fig. 3: eine zweite Ausgestaltungsvariante einer Netzfilterstufe eines Netzfilters der Anordnung gemäß Fig. 1;
- Fig. 4: eine beispielhafte Ausgestaltung eines Schaltmoduls, wie dieses in den Netzfilterstufen gemäß Figuren 2 und 3 zum Einsatz kommt; und
- Fig. 5: eine schematische Darstellung einer Steuereinheit zur Erzeugung von Steuersignalen für das erfindungsgemäße Netzfilter.

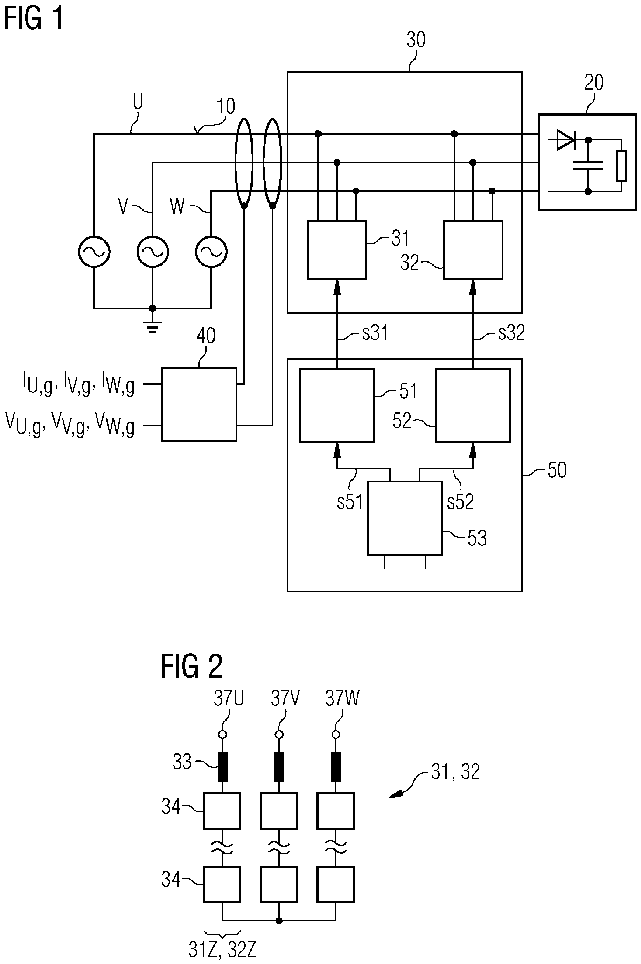

Fig. 1 zeigt eine erfindungsgemäße Anordnung zur Kompensation von Netzstörungen in einem Dreiphasennetz 10. Das Dreiphasennetz 10 weist drei Phasen U, V, W auf. An das Dreiphasennetz 10 ist ein elektrische Komponente 20 angeschlossen. Die elektrische Komponente 20 repräsentiert eine elektrische Großanlage, beispielweise eine Thyristor- oder Diodenbasierte Gleichrichtereinheit, wie diese z.B. für Elektrolyseanwendungen zum Einsatz kommt. Die elektrische Komponente 20 kann allgemein nicht nur ein Verbraucher, sondern auch eine energieerzeugende Anlage sein.

Die elektrische Komponente 20 erzeugt im Betrieb ein breites Spektrum an leitungsgebundenen Störungen, insbesondere Oberschwingungen des Stromes bei Vielfachen der Netzfrequenz, die als Netzstörungen bezeichnet werden. Um die Netzstörungen in dem Dreiphasennetz 10 zu reduzieren, ist in räumlicher Nähe der elektrischen Komponente 20 ein Netzfilter 30 angeordnet.

Ist zum Betrieb der elektrischen Komponente 20 ein (hier nicht gezeigter) Transformator erforderlich, der die Netzspannung des Dreiphasennetzes 10 auf eine für die elektrische Komponente 20 geeignete Spannung herabsetzt, so kann das Netzfilter 30 sowohl vor als auch hinter dem Transformator eingesetzt werden. Vorzugsweise erfolgt eine Platzierung auf der Hochspannungsseite, zumeist der Netzseite.

Das Netzfilter 30 umfasst eine Kombination von zumindest zwei aktiven Netzfilterstufen. In der in Fig. 1 gezeigten Ausgestaltungsvariante sind zwei aktive Netzfilterstufen 31, 32 dargestellt. Die Anzahl der Netzfilterstufen könnte auch größer als zwei sein. Die zwei aktiven Netzfilterstufen 31, 32 sind parallel zueinander geschaltet. Die zwei aktiven Netzfilterstufen 31, 32 sind zu der elektrischen Komponente 20 parallel geschaltet. Dies gilt auch dann, wenn das Netzfilter eine größere Anzahl als zwei aktive Netzfilterstufen umfasst.

Die Netzfilterstufen 31, 32 des Netzfilters 30 werden von einer Steuereinheit 50 zur Reduktion bzw. Kompensation der Netzstörungen geeignet gesteuert. Dabei ist die Steuereinheit 50 allgemein dazu ausgebildet, jede der Netzfilterstufen 31, 32 im Betrieb der elektrischen Komponente 20 für die Korrektur der Netzstörungen innerhalb eines jeweils zugeordneten Frequenzbereichs (Frequenzbands) zu betreiben. Die den Netzfilterstufen 31, 32 jeweils zugeordneten Frequenzbereiche überlappen sich dabei nicht.

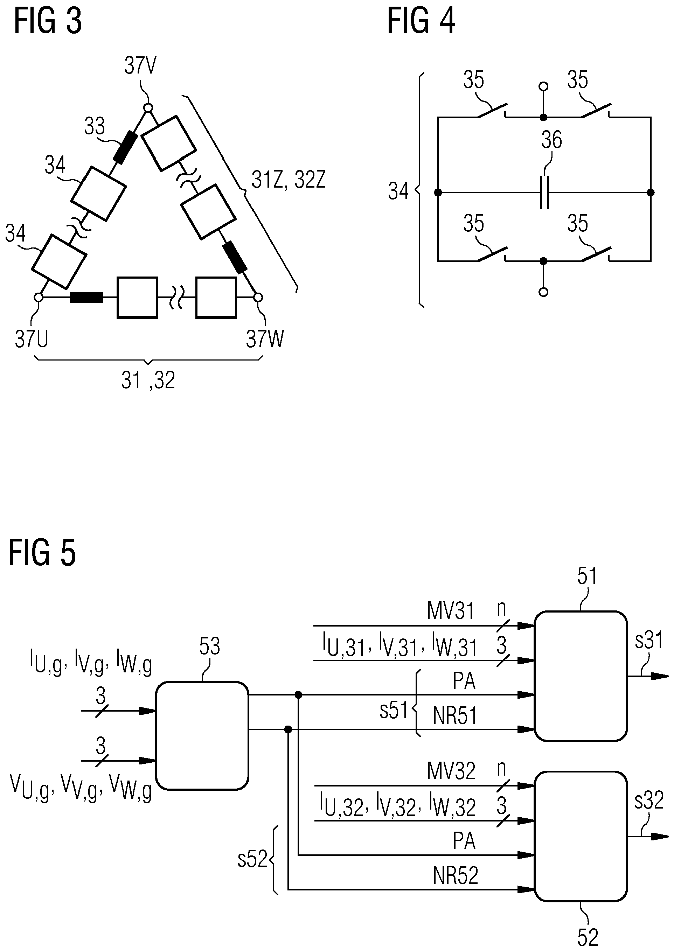

Die hierzu von der Steuereinheit 50 erzeugten und abgegebenen Steuersignale s31, s32 nutzen dabei von einer Messeinrichtung 40 erfasste Strom- und Spannungswerte der drei Phasen U, V, W des Dreiphasennetzes 10. Die von der Messeinrichtung 40 abgegebenen Strommesswerte I_{U,g}/I_{V,g}/I_{W,g} repräsentieren dabei die Ströme der Phasen U, V, W des Dreiphasennetzes 10. Die von der Messeinrichtung 40 abgegebenen Spannungsmesswerte V_{U,g}/V_{V,g}/V_{W,g} repräsentieren die Spannungen der Phasen U, V, W des Dreiphasennetzes 10. Die Erzeugung der Steuersignale s31, s32 wird weiter unten in Verbindung mit Fig. 5 erläutert.

Jede der Netzfilterstufen 31, 32 umfasst pro Phase des Dreiphasennetzes 10 einen Zweig 31Z (Netzfilterstufe 31) bzw. 32Z (Netzfilterstufe 32) mit jeweils einer Induktivität 33 und zumindest einem Schaltmodul 34. In einer jeweiligen Netzfilterstufe 31, 32 sind die Zweige 31Z bzw. 32Z immer gleichartig (d.h. mit einer identischen Anzahl an Schaltmodulen 34) aufgebaut. Die Anzahl der Schaltmodule 34 beträgt, wie dies in den Ausführungsbeispielen der Figuren 2 und 3 exemplarisch dargestellt ist, vorzugsweise pro Zweig zwei oder drei, wobei auch eine größere Anzahl an Schaltmodulen 34 gewählt werden kann.

Während die Ausgestaltungsvariante gemäß Fig. 2 eine Verschaltung der drei Zweige 31Z bzw. 32Z in Sternschaltung zeigt, zeigt die Ausgestaltungsvariante gemäß Fig. 3 eine Verschaltung der drei Zweige 31Z bzw. 32Z in Dreiecksschaltung. Der Sternpunkt der Sternschaltung gemäß Fig. 2 kann beispielsweise mit dem Nullleiter des Dreiphasennetzes verbunden werden. Dies ist jedoch nicht zwingend erforderlich. Die Anschlüsse 37U, 37V, 37W der drei Zweige 31Z bzw. 32Z werden mit den Phasen U, V, W des Dreiphasennetzes 10 elektrisch verschaltet. In entsprechender Weise gilt dies für die Ausgestaltungsvariante gemäß Fig. 3.

In einer Ausgestaltungsvariante können die aktiven Netzfilterstufen 31, 32 jeweils mit in Sternschaltung verschalteten Zweigen oder jeweils mit in Dreiecksschaltung verschalteten Zweigen ausgebildet sein. Ebenso ist eine Ausgestaltung denkbar, bei der eine aktive Netzfilterstufe mit Zweigen in Sternschaltung und die andere der beiden Netzfilterstufen mit Zweigen in Dreiecksschaltung verschaltet sind.

Die Anzahl der Schaltmodule 34 pro Zweig 31Z, 32Z bemisst sich einerseits nach der Spannungsanforderung der elektrischen Komponente 20 sowie dem gewünschten EMV-Verhalten (d.h. dem gewünschten Maß der Kompensation der Netzstörungen). Der durch eine zusätzliche Anzahl an Schaltmodulen pro Zweig erzielbare Vorteil an Kompensationsleitung nimmt dabei mit jedem weiteren Schaltmodul ab. In der Praxis hat sich herausgestellt, dass zwei oder drei Schaltmodule 34 pro Zweig einen guten Kompromiss zwischen EMV-Verhalten und Skalierbarkeit in Bezug auf die erforderliche Netzspannung der elektrischen Komponente 20 sowie technischer Komplexität und Wirtschaftlichkeit darstellen.

Jedes Schaltmodul 34 besteht aus vier steuerbaren Leistungshalbleiterschaltelementen 35 und einem Zwischenkreiskondensator 36. Jedes der Schaltmodule 34 ist vorzugsweise als Brückenschaltung (H-Brücke) mit den vier steuerbaren Leistungshalbleiterschaltern 35 und dem Zwischenkreiskondensator 36 aufgebaut.

Die Leistungshalbleiterschalter 35 sind beispielsweise IGBTs, insbesondere Si-IGBTs, und MOSFETs, insbesondere SiC-MOSFETs. Dabei sind die Leistungshalbleiterschalter 35 der Schaltmodule 34 einer Netzfilterstufe 31 oder 32 immer einheitlich gewählt.

Vorzugsweise sind die Schaltmodule 34 in den Zweigen der parallelen aktiven Netzfilterstufen 31, 32 mit Leistungshalbleiterschaltern unterschiedlichen Typs bestückt. Hierdurch wird es möglich, dass jede aktive Netzfilterstufe 31, 32 optimiert für die Korrektur der Netzstörungen innerhalb eines zugeordneten Frequenzbereichs betrieben werden kann. Die Auswahl der Leistungshalbleiterschalter in den Schaltmodulen 34 der aktiven Netzfilterstufen 31, 32 erfolgt dann derart, dass sich die Halbleiterschalter 35 für den zugewiesenen Frequenzbereich bestmöglich eignen.

So kann beispielsweise die aktive Netzfilterstufe 31 Störanteile bis zu einer vorgegebenen Harmonischen (z.B. die 9. Harmonische) der Netzfrequenz kompensieren. Hierzu werden beispielsweise die Halbleiterschalter 35 in den Schaltmodulen 34 der aktiven Netzfilterstufe 31 als Si-IGBTs ausgebildet, welche sich durch eine hohe Strombelastbarkeit bei kleinen Schaltfrequenzen in einem Bereich zwischen 2 kHz und 8 kHz auszeichnet. Demgegenüber ist die aktive Netzfilterstufe 32 dazu vorgesehen, Störanteile ab der vorgegebenen Harmonischen auszugleichen. Dazu werden die Schaltmodule der aktiven Netzfilterstufe 32 mit Halbleiterschaltelementen aus SiC-MOSFETs verwendet. Diese sind für höhere Schaltfrequenzen besser geeignet, weisen jedoch eine geringere Strombelastbarkeit auf. Typische Schaltfrequenzen von SiC-MOSFETs betragen zwischen 16 kHz und 64 kHz.

Fig. 5 zeigt eine schematische Darstellung der Steuereinheit 50 zur Erzeugung der Steuersignale s31, s32 zur Ansteuerung der Halbleiterschaltelemente 35 der Schalteinheiten 34 der jeweiligen aktiven Netzfilterstufen 31, 32.

In diesem Ausführungsbeispiel umfasst die Steuereinheit 50 eine erste Filterstufen-Steuereinheit 51 zur Erzeugung und Abgabe des Steuersignals s31 und eine zweite Filterstufen-Steuereinheit 52 zur Erzeugung und Abgabe des Steuersignals s32. Die erste Filterstufen-Steuereinheit 51 ist somit der aktiven Netzfilterstufe 31 zugeordnet. Die zweite Filterstufen-Steuereinheit 52 ist somit der aktiven Netzfilterstufe 32 zugeordnet. Darüber hinaus umfasst die Steuereinheit 50 eine als Master-Steuereinheit dienende Steuereinheit 53, welche die eingangs bereits erwähnten Phasenströme I_{U,g}/I_{V,g}/I_{W,g} und Phasenspannungen V_{U,g}/V_{V,g}/V_{W,g} als Eingangsgrößen erhält. Die Master-Steuereinheit 53 umfasst insbesondere eine PLL sowie ein Tiefpass- und/oder Hochpassfilter.

Die Master-Steuereinheit 53 ermittelt aus den Eingangsgrößen einen Phasenwinkel PA und gibt diesen an die erste und zweite Filterstufen-Steuereinheiten 51, 52 aus. Darüber hinaus stellt die Master-Steuereinheit 53 der ersten und der zweiten Filterstufen-Steuereinheit 51, 52 eine Information NR51 bzw. NR52 bereit, in welcher das von den aktiven Filterstufen 31, 32 zu unterdrückende Frequenzspektrum enthalten ist. PA und NR51 repräsentieren zusammen das Signal s51, PA und NR52 repräsentieren zusammen das Signal s52.

Die ersten und zweiten Filterstufen-Steuereinheiten 51, 52 erhalten darüber hinaus jeweilige Messwerte über Spannungen der ihnen zugeordneten aktiven Filterstufen in Gestalt der Signale MV31, MV32. Ferner werden in den jeweiligen Netzfilterstufen 31, 32 auftretende Ströme I_{U,31}, I_{V,31}, I_{W,31} bzw. I_{U,32}, I_{V,32}, I_{W,32} zur Verarbeitung zugeführt. Die entsprechenden Messeinheiten zur Erfassung der in den jeweiligen Filterstufen anliegenden Ströme und Spannungen sind figürlich nicht dargestellt. Aus diesen Eingangssignalen ermitteln die erste bzw. zweite Filterstufen-Steuereinheit 51, 52 jeweils für sich dann die geeigneten Steuerinformationen für die Halbleiterschaltelemente 35 der Schaltmodule 34 der jeweiligen Netzfilterstufen 31, 32 und geben diese Steuerinformationen in Gestalt der Steuersignale s31 bzw. s32 an die Netzfilterstufen 31, 32 ab.

In dem in Fig. 5 gezeigten Ausführungsbeispiel werden die Netzfilterstufen 31, 32 durch unabhängige Filterstufen-Steuereinheiten gesteuert. Alternativ kann auch eine Steuerung durch eine gemeinsame Steuereinheit erfolgen.

Die Filterstufen-Steuereinheiten 51, 52 sorgen dafür, dass die aktiven Netzfilterstufen 31, 32 nur die Störkomponenten in dem ihnen zugewiesenen Frequenzbereich kompensieren, und zwar in dem Bereich, für den die Halbleiterschaltelemente der Schaltmodule 34 optimiert sind. Spektralkomponenten außerhalb dieses Bereiches lassen sie unberührt.

Der Vorteil des vorgeschlagenen Vorgehens besteht darin, dass das Netzfilter 30 kaskadierbar ist. Anstatt der hier beispielhaft aufgeführten zwei Netzfilterstufen für zwei definierte Frequenzbereiche kann das Netzfilter auch mit drei oder mehr Netzfilterstufen für drei oder mehr Frequenzbereiche ausgeführt werden.

Die unterschiedlichen Netzfilterstufen nehmen nur eine Kompensation der Störanteile in dem für sie vorgegebenen Frequenzbereich vor, für den sie durch die Auswahl der Halbleiterschaltelemente optimiert sind. Die Steuereinheit stellt sicher, dass auch ohne eine induktive Entkopplung zwischen den Netzfilterstufen keine Pendelströme zwischen den Netzfilterstufen auftreten. Somit kann auf eine induktive Entkopplung der Netzfilterstufen in dem Dreiphasennetz verzichtet werden.

Im Ergebnis ist es möglich, ein Netzfilter in Modulbauweise bereitzustellen, das wirtschaftlich vorteilhaft und technisch optimiert für Großanlagen mit hoher Störemission aufgebaut werden kann. Das Netzfilter kann als Multilevel-Netzfilter betrachtet werden, bei dem durch die abgestimmte Steuerung trotz der Kombination mehrerer Netzfilterstufen die Entstehung von Pendelströmen ohne das Vorhandensein von Induktivitäten verhindert werden kann.

### Bezugszeichenliste

- 10: Dreiphasennetz
- 20: elektrische Komponente
- 30: Netzfilter
- 31: erste Netzfilterstufe
- 32: zweite Netzfilterstufe
- 31Z: Zweig in der ersten Netzfilterstufe
- 32Z: Zweig in der zweiten Netzfilterstufe
- 33: Induktivität
- 34: Schaltmodul
- 35: Leistungshalbleiterschalter
- 36: Zwischenkreiskondensator
- 40: Messeinrichtung
- 50: Steuereinheit
- 51: erste Filterstufen-Steuereinheit
- 52: zweite Filterstufen-Steuereinheit
- 53: Master-Steuereinheit
- U, V, W: Phasen des Dreiphasennetzes
- s31: Steuersignal
- s32: Steuersignal
- s51: Eingangssignale für Filterstufen-Steuereinheit 51
- s52: Eingangssignale für Filterstufen-Steuereinheit 52

## Patentansprüche

1. Anordnung zur Kompensation von Netzstörungen in einem Dreiphasennetz (10), wobei die Netzstörungen im Betrieb einer an das Dreiphasennetz (10) angeschlossenen, elektrischen Komponente (20) erzeugt sind, mit einer Steuereinheit (50) und mit einem Netzfilter (30), das in dem Dreiphasennetz (10) angeordnet ist, um die Netzstörung zu reduzieren,
wobei das Netzfilter (30) eine Kombination von zumindest zwei aktiven Netzfilterstufen (31, 32) umfasst, die zu der elektrischen Komponente (20) parallel geschaltet sind, und wobei die Steuereinheit (50) dazu ausgebildet ist, jede der Netzfilterstufen (31, 32) im Betrieb der elektrischen Komponente (20) für die Korrektur der Netzstörungen innerhalb eines jeweils zugeordneten Frequenzbereichs zu betreiben.

2. Anordnung nach Anspruch 1, **dadurch gekennzeichnet, dass** die zumindest zwei aktiven Netzfilterstufen (31, 32) parallel geschaltet sind.

3. Anordnung nach Anspruch 1 oder 2, **dadurch gekennzeichnet, dass** jede Netzfilterstufe (31, 32) pro Phase des Dreiphasennetzes (10) einen Zweig (31Z, 32Z) mit einer Induktivität (33) und zumindest einem Schaltmodul (34) umfasst.

4. Anordnung nach Anspruch 3, **dadurch gekennzeichnet, dass** die Anzahl der Schaltmodule (34) pro Zweig (31Z, 32Z) zwei oder drei beträgt.

5. Anordnung nach Anspruch 3 oder 4, **dadurch gekennzeichnet, dass** jede Netzfilterstufe (31, 32) gleichartig aufgebaute Zweige (31Z, 32Z) umfasst.

6. Anordnung nach einem der Ansprüche 3 bis 5, **dadurch gekennzeichnet, dass** die Zweige (31Z, 32Z) einer jeweiligen Netzfilterstufe (31, 32) in Sternschaltung verschaltet sind.

7. Anordnung nach einem der Ansprüche 3 bis 6, **dadurch gekennzeichnet, dass** die Zweige (31Z, 32Z) einer jeweiligen Netzfilterstufe (31, 32) in Dreiecksschaltung verschaltet sind.

8. Anordnung nach Anspruch 6 und 7, **dadurch gekennzeichnet, dass** die Zweige (31Z, 32Z) einer der Netzfilterstufen (31, 32) in Sternschaltung und die Zweige (31Z, 32Z) einer anderen der Netzfilterstufen (31, 32) in Dreieckschaltung verschaltet sind.

9. Anordnung nach einem der Ansprüche 3 bis 8, **dadurch gekennzeichnet, dass** jedes der Schaltmodule (34) als Brückenschaltung mit vier steuerbaren Leistungshalbleiterschaltern (35) und einem Zwischenkreiskondensator (36) aufgebaut ist.

10. Anordnung nach einem der Ansprüche 3 bis 9, **dadurch gekennzeichnet, dass** die Schaltmodule (34) in den Zweigen (31Z, 32Z) der parallelen Netzfilterstufen (31, 32) Leistungshalbleiterschalter (35) eines gleichen oder eines unterschiedlichen Typs umfassen.

11. Anordnung nach Anspruch 10, **dadurch gekennzeichnet, dass** als Leistungshalbleiterschalter (35) MOSFETs und/oder IGBTs verwendet werden.

12. Anordnung nach einem der vorhergehenden Ansprüche, **dadurch gekennzeichnet, dass** die Steuereinheit (50) für jede der aktiven Netzfilterstufen (31, 32) eine zugeordnete Filterstufen-Steuereinheit (51, 52) umfasst, wobei jede der Filterstufen-Steuereinheiten (51, 52) dazu ausgebildet ist, Störkomponenten in dem Frequenzbereich zu kompensieren, der der Netzfilterstufe (31, 32) zugeordnet ist.

13. Anordnung nach Anspruch 12, **dadurch gekennzeichnet, dass** jede der Filterstufen-Steuereinheiten (51, 52) eine Messeinrichtung zur Bestimmung der Frequenzen der Netzstörungen umfasst.

14. Anordnung nach Anspruch 12 oder 13, **dadurch gekennzeichnet, dass** jede der Filterstufen-Steuereinheiten (51, 52) dazu ausgebildet ist, eine Selektion des der zugeordneten Filterstufen-Steuereinheit (51, 52) zugeordneten Frequenzbereichs durchzuführen.

15. Anordnung nach einem der vorhergehenden Ansprüche, **dadurch gekennzeichnet, dass** das Netzfilter (30) in räumlicher Nähe zu der elektrischen Komponente (20) angeordnet ist.
